# EUROPÄISCHE PATENTSCHRIFT

(11) **EP 3 986 734 B1**
(45) Veröffentlichungstag und Bekanntmachung des Hinweises auf die Patenterteilung: **09.10.2024**
(21) Anmeldenummer: 20750655.1
(22) Anmeldetag: 03.08.2020
(51) Int. Cl.: B60J 5/04, E05F 11/38, E05F 11/48

(54) **TÜRMODUL EINER FAHRZEUGTÜR**
DOOR MODULE OF A VEHICLE DOOR
MODULE DE PORTE DE VÉHICULE

(30) Priorität: 06.08.2019 DE 102019211789; 29.11.2019 DE 102019218580
(43) Veröffentlichungstag der Anmeldung: 27.04.2022
(73) Patentinhaber: Brose Fahrzeugteile SE & Co. Kommanditgesellschaft, Bamberg, 96052 Bamberg (DE)
(72) Erfinder: DOBIAS, Dominik, 90701 Myjava (SK); DALLOS, Christian, 97211 Poruba (SK); ITTERMANN, Matthias, 96253 Untersiemau (DE); HERZOG, Hans, 96129 Strullendorf (DE); JAHN, Michael, 96231 Bad Staffelstein (DE)
(74) Vertreter: FDST Patentanwälte
(86) Internationale Anmeldenummer: PCT/EP2020/071772
(87) Internationale Veröffentlichungsnummer: WO 2021/023696

(56) Entgegenhaltungen:
- EP-A1- 0 385 197
- EP-B1- 0 385 197
- WO-A1-2019/094673
- DE-A1- 102010 029 509
- US-A1- 2007 163 177

## Beschreibung

Die Erfindung betrifft ein Türmodul einer Fahrzeugtür, aufweisend eine Trägerplatte mit einem Seil-Fensterheber mit mindestens einer Führungsschiene, und eine damit gefügte oder fügbare Türstruktur. Die Erfindung betrifft weiterhin eine Fahrzeugtür mit einem solchen Türmodul.

Eine Türkarosserie einer Fahrzeugtür weist in der Regel ein die Türaußenhaut der Fahrzeugtür bildendes Türaußenblech und ein mit dem Türaußenblech verbundenes, fahrzeuginnenseitiges, Türinnenblech auf, zwischen welchen ein Hohlraum als Montageraum ausgebildet ist, in welchen Funktionselemente oder Funktionskomponenten der Fahrzeugtür, wie beispielsweise ein Fensterheber, ein Türschloss, ein Airbag oder dergleichen angeordnet sind.

Zur Montage der Funktionskomponenten ist es möglich, diese auf einer Trägerplatte, auch Türmodulträger oder Aggregatträger genannt, vorzumontieren. Die bestückte Trägerplatte ist anschließend auf eine Montageöffnung der Fahrzeugtür oder des Türinnenblechs aufsetzbar, um diese abzudecken, insbesondere um eine Nassraum-/Trockenraumtrennung zu realisieren. Beim Einbau der Trägerplatte in die Fahrzeugtür kann es erforderlich sein, gewisse Funktionskomponenten, wie beispielsweise Führungsschienen eines Fensterhebers, zusätzlich an einer Türstruktur oder einer Karosserie der Fahrzeugtür zu montieren.

Fensterheber für Fahrzeugtüren sind beispielsweise mit einem Seilzugmechanismus zum Anheben und zum Absenken einer (Fenster-)Scheibe ausgeführt. Bei einem derartigen Fensterheber ist die Scheibe mittels eines Mitnehmers oder Schienengleiters entlang mindestens einer Führungsschiene geführt. Der Seilzugmechanismus weist typischerweise einen Seilzug auf, der einerseits in einer diesen auf- und abwickelnden Seiltrommel sowie andererseits unter einfacher oder mehrfacher Umlenkung an den Mitnehmer oder Schienengleiter geführt und dort fixiert ist.

Die Umlenkung des Seilzugs erfolgt in der Regel mittels Seilumlenkrollen, welche in den stirnseitigen Endbereichen der Führungsschiene, welche nachfolgend auch als Seilumlenkbereiche bezeichnet werden, angeordnet sind. Die Seilumlenkrollen sind hierbei auf Lagerstellen aufgesetzt, und an diesen drehbar oder rotierbar gelagert.

Zur Montage der Trägerplatte an der Türstruktur kann einer der Seilumlenkbereiche einer Führungsschiene über den äußeren Rand der Trägerplatte hinausragen, und in eine Aufnahme der Türstruktur eingesetzt werden. Durch den im Wesentlichen freistehenden Seilumlenkbereich wird jedoch einerseits die mechanische Festigkeit und Stabilität des Fensterhebers beziehungsweise der Führungsschiene in diesem Bereich nachteilig reduziert, sowie andererseits die mechanische Beanspruchung aufgrund von Hebelverhältnissen nachteilig erhöht.

Zur Stabilisierung des Seilumlenkbereichs wird dieser in der Regel mit der Türstuktur mechanisch gekoppelt. Hierzu sind beispielsweise bolzen- oder schraubendurchsetzte Lagerstellen denkbar, bei welchen eine Befestigungsschraube oder ein Befestigungsbolzen die Lagerstelle entlang der Drehachse der Seilumlenkrolle zumindest teilweise durchsetzt und kopfseitig an der Aufnahme beziehungsweise der Türstruktur gehalten ist. Die Lagerstelle weist hierbei beispielsweise ein Innengewinde auf. Der Seilumlenkbereich wird dadurch kraftschlüssig mit der Türstruktur gefügt oder schraubbefestigt. Durch die Schraubbefestigung wird jedoch ein zusätzlicher Montageschritt bei der Montage der Fahrzeugtür notwendig.

Zur Vermeidung dieses Montageschritts sind beispielsweise auch Seilumlenkbereiche mit bolzen- oder schraubenfreien Lagerstellen möglich, also Lagerstellen, welche im Montagezustand nicht von einem Befestigungselement, wie beispielsweise einer Befestigungsschraube oder einem Befestigungsbolzen, durchsetzt werden. Bei derartigen Ausführungen ist der Seilumlenkbereich typischerweise nicht direkt mit der Türstruktur verbunden oder mit dieser gefügt. Mit anderen Worten fehlt in der Regel eine unmittelbare mechanische Kopplung zwischen dem Seilumlenkbereich und der Türstruktur, wodurch wird die mechanische Stabilität des Seilumlenkbereich nachteilig reduziert. Dadurch können im Betrieb des Fensterhebers aufgrund der über den geführten Seilzug auf die Seilumlenkrolle einwirkenden Kräfte Bewegungen und (Ver-)Biegungen beziehungsweise Verformungen des Seilumlenkbereichs auftreten, beispielsweise im Bereich zwischen 5 - 6 mm (Millimeter). Insbesondere kann es hierbei vorkommen, dass der Seilumlenkbereich in einen Berührungskontakt mit der geführten Fensterscheibe oder einem Mitnehmer beziehungsweise Schienengleiter kommt, wodurch eine ungewünschte Geräuschentwicklung bewirkt wird. Daher sind derartige schrauben- oder bolzenlose Seilumlenkbereiche häufig mit einem zusätzlichen Dämpfungselement versehen.

Die EP 0 385 197 A1 offenbart eine Fahrzeugtür mit einem als Vormontagegruppe ausgebildeten Aggregateträger, welcher gegenüber einem den Aggregateträger tragenden Türkörper einstellbar ist, und welcher eine etwa senkrechte Fensterheberschiene für eine in der Fahrzeugtüre versenkbare Scheibe aufnimmt. In einem unteren Endbereich der Fensterheberschiene ist ein zum Innenraum des Fahrzeuges gerichteter Ansatz angeformt, wobei in dem den Ansatz gegenüberliegenden Abschnitt des Türkörpers eine Aussparung vorgesehen ist, derart, dass unabhängig von der toleranz- und/oder einstellbedingten Lage der Fensterheberschiene ein Eingreifen des Ansatzes in die Aussparung bei einer seitenaufprallbedingten Verschiebung der Fensterheberschiene gewährleistet ist.

In der US 2007/163177 A1 ist ein Türmodul für eine Fahrzeugtür offenbart, dass eine Modulplatte und eine an der Modulplatte befestigte Fensterheberschiene umfasst. Die Fensterheberschiene ist translatorisch beweglich, schwenkbar an der Modulplatte befestigt und durch einen leicht lösbaren Haltemechanismus in einer Bereitstellungsposition fixiert.

Der Erfindung liegt die Aufgabe zugrunde, ein besonders geeignetes Türmodul einer Fahrzeugtür anzugeben. Insbesondere soll eine möglichst stabile und einfach herstellbare Verbindung zwischen einer Trägerplatte und einer Türstruktur ermöglicht sein. Der Erfindung liegt weiterhin die Aufgabe zugrunde, eine besonders geeignete Fahrzeugtür mit einem solchen Türmodul anzugeben.

Hinsichtlich des Türmoduls wird die Aufgabe mit den Merkmalen des Anspruchs 1 und hinsichtlich der Fahrzeugtür mit den Merkmalen des Anspruchs 13 erfindungsgemäß gelöst. Vorteilhafte Ausgestaltungen und Weiterbildungen sind Gegenstand der jeweiligen Unteransprüche. Die im Hinblick auf das Türmodul angeführten Vorteile und Ausgestaltungen sind sinngemäß auch auf die Fahrzeugtür übertragbar und umgekehrt.

Das erfindungsgemäße Türmodul ist insbesondere als eine Türbaugruppe einer Fahrzeugtür ausgeführt. Das Türmodul weist hierbei eine Trägerplatte als Türmodulträger oder Aggregatträger auf, an welcher ein beispielsweise vormontierter Seil-Fensterheber mit mindestens einer Führungsschiene angeordnet ist. Das Türmodul weist weiterhin eine Türstruktur, insbesondere in Form eines Türinnenblechs oder einer Fensterrahmenstruktur, auf, welche mit der Trägerplatte gefügt oder fügbar ist.

Die Führungsschiene erstreckt sich hierbei mit einem Seilumlenkbereich über einen äußeren Rand der Trägerplatte hinaus. Mit anderen Worten steht der Seilumlenkbereich der Führungsschiene den Außenumfang der Trägerplatte über.

Der Seilumlenkbereich ist hierbei insbesondere als eine (Füge-)Schnittstelle der Trägerplatte mit der Türstruktur ausgebildet. Der Seilumlenkbereich ist hierbei mit einer Fügekontur versehen, welche im Füge- oder Montagezustand formschlüssig in einer Aufnahmekontur der Türstruktur einsitzt. Die Fügekontur ist erfindungsgemäß einteilig, also einstückig oder monolitisch, an den Seilumlenkbereich angeformt, oder ist nicht erfindungsgemäß mehrteilig, also als ein oder mehrere separate Bauteile hierzu ausgeführt. Die Aufnahmekontur ist beispielsweise ebenfalls einteilig oder mehrteilig zu der Türstruktur ausgebildet.

Die Fügekontur ist hierbei erfindungsgemäß derart ausgelegt und ausgestaltet, dass wenn die Fügekontur in der Aufnahmekontur einsitzt, die Fügekontur die Aufnahmekontur zumindest teilweise hintergreift, so dass der Seilumlenkbereich entlang einer hierzu senkrecht orientierten Richtung stabilisierend gehalten ist. Mit anderen Worten ist die Aufnahmekontur entlang der senkrechten Richtung formschlüssig von der Fügekontur zumindest abschnittsweise hintergriffen, wodurch der Seilumlenkbereich entlang dieser Richtung mechanisch stabilisiert wird. Dies bedeutet, dass eine Hinterhakung der Türstruktur im Bereich der Aufnahmekontur durch die Fügekontur des Seilumlenkbereichs realisiert ist. Dadurch ist ein besonders geeignetes Türmodul realisiert.

Durch den Formschluss zwischen der Fügekontur und der Aufnahme ist eine mechanische Kopplung zwischen dem Seilumlenkbereich und der Türstruktur realisiert, welche den Seilumlenkbereich hinsichtlich im Betrieb auftretender Kräfte betriebssicher und zuverlässig mechanisch stabilisiert. Mit anderen Worten werden auftretende Lasten, Spannungen und Kräfte, welche auf den Seilumlenkbereich einwirken, zumindest teilweise auf die Türstruktur übertragen. Dies bedeutet, dass die erfindungsgemäße (Füge-)Schnittstelle zwischen der Trägerplatte und der Türstruktur die mechanische Steifigkeit oder Festigkeit des Seil-Fensterhebers beziehungsweise der Führungsschiene verbessert.

Insbesondere werden somit ungewünschte Bewegungen, mechanische (Ver-)Biegungen oder Verformungen des Seilumlenkbereichs vorteilhaft und konstruktiv einfach vermieden oder zumindest reduziert. Dadurch ist es möglich, den Seilumlenkbereich ohne ein zusätzliches Dämpfungselement auszuführen, da die Gefahr einer ungewünschten Geräuschentwicklung durch die mechanische Stabilisierung vorteilhaft und einfach vermieden ist.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Im Nachfolgenden sind Angaben hinsichtlich der Raumrichtungen auch insbesondere in einem Koordinatensystem des Kraftfahrzeugs (Fahrzeugkoordinatensystem) bezüglich einer beispielhaften Einbausituation des Türmoduls in einer Seitentür des Kraftfahrzeugs angegeben. Die Abszissenachse (X-Achse, X-Richtung) ist hierbei entlang der Fahrzeuglängsrichtung (Fahrrichtung) und die Ordinatenachse (Y-Achse, Y-Richtung) entlang der Fahrzeugquerrichtung sowie die Applikatenachse (Z-Achse, Z-Richtung) entlang der Fahrzeughöhe orientiert.

Der Seilumlenkbereich steht der Trägerplatte insbesondere entlang der Z-Richtung über. Die Fügekontur hintergreift die Aufnahmekontur hierbei vorzugsweise entlang der Y-Richtung. Mit anderen Worten sind die Trägerplatte und die Türstruktur entlang der Y-Richtung formschlüssig miteinander gefügt.

In einer bevorzugten Ausführung ist der Seilumlenkbereich mit einer - oder bolzenlosen Lagerstelle ausgeführt, an welcher eine Seilumlenkrolle drehbar oder rotierbar gelagert ist. Mit anderen Worten ist kein zusätzliches, separates Befestigungselement zwischen dem Seilumlenkbereich und der Türstruktur vorgesehen.

Dadurch ist ein geeigneter Seilumlenkbereich realisiert, welcher eine besonders einfache und aufwandsreduzierte Montage des Türmoduls ermöglicht. Insbesondere entfällt somit ein zusätzlicher Montageschritt, bei welchem beispielsweise eine Befestigungsschraube in ein Innengewinde der Lagerstelle eingedreht wird, um den Seilumlenkbereich stabilisierend mit der Türstruktur zu koppeln.

In einer vorteilhaften Ausgestaltung ist die Fügekontur an einer der Lagerstelle gegenüberliegenden Seite des Seilumlenkbereichs angeordnet. Mit anderen Worten ist die Lagerstelle beispielsweise an einer Vorderseite des Seilumlenkbereichs angeordnet, welche an einer den Seil-Fensterheber tragenden Planseite der Trägerplatte angeordnet ist. Die Fügekontur ist entsprechend an einer gegenüberliegenden Rückseite des Seilumlenkbereichs angeordnet. Dadurch ist eine einfache und bauraumkompakte Kopplung zwischen dem Seilumlenkbereich und der Türstruktur ermöglicht, welche im Wesentlichen keine konstruktiven Auswirkungen auf die Lagerstelle oder die Seilumlenkrolle hat.

In einer zweckmäßigen Ausbildung ist die Fügekontur in die Aufnahmekontur entlang einer Schienenlängsrichtung (Montagerichtung) eingesteckt oder einsteckbar. Die Schienenlängsrichtung ist hierbei im Wesentlichen entlang der Z-Richtung orientiert. Die Aufnahmekontur ist beispielsweise als eine Durchführöffnung der Türstruktur ausgeführt, durch welche die Fügekontur zumindest teilweise hindurchgeführt wird. Die Fügekontur und die Aufnahmekontur greifen hierbei entlang der Schienenlängs- oder Montagerichtung nach Art eines Schlüssel-Schloss-Prinzips ineinander, wobei die Aufnahmekontur im Wesentlichen das Schlüsselloch und die Fügekontur als Schlüssel ausgebildet ist. Dadurch ist eine besonders einfache und aufwandsreduzierte Montage des Türmoduls gewährleistet.

Beispielsweise ist es denkbar, dass die Fensterheber- oder Führungsschiene - und somit der Seilumlenkbereich - aus einem Metall hergestellt sind. In einer bevorzugten, sowie konstruktiv besonders einfachen und bauteilreduzierten Ausführung ist zumindest der Seilumlenkbereich als ein Spritzgussteil ausgeführt, an welchen die Fügekontur einstückig, also einteilig oder monolithisch, angeformt ist. Dadurch ist eine einfache sowie aufwands- und kostenreduzierte Herstellung des Türmoduls realisiert.

In einer denkbaren Weiterbildung ist die Fügekontur im Zuge des Spritzgussprozesses hierbei ohne einen Schieber hergestellt. Mit anderen Worten ist für die Entformung der Fügekontur aus einem Spritzgusswerkzeug kein zusätzlicher beweglicher Schieber notwendig. Es werden also keine Hilfstrennebenen im Zuge des Spritzgussprozesses erzeugt, um partielle Spritzteilbereiche der Fügekontur freizustellen. Das Spritzgussteil, also der Seilumlenkbereich und die Fügekontur können also im Wesentlichen mit einem einfach funktionierenden Auf-Zu-Spritzgusswerkzeug entlang einer Hauptentformungsrichtung entformt werden.

Dadurch ist eine besonders einfache und kostengünstige Herstellung des Türmoduls gewährleistet.

In einer nicht erfindungsgemäßen Ausgestaltung weist die Fügekontur eine im Wesentlichen T-förmige Querschnittsform auf. Die Fügekontur weist die T-förmige Geometrie hierbei insbesondere in einer XY-Ebene auf, wobei sich die Fügekontur insbesondere entlang der Z-Richtung erstreckt. Dadurch ist eine besonders einfache und zweckmäßige Ausgestaltungsform der Fügekontur realisiert.

In einer denkbaren nicht erfindungsgemäßen Weiterbildung greift der vertikale T-Schenkel der Fügekontur in einen Führungsschlitz der Aufnahmekontur formschlüssig ein. Der vertikale T-Schenkel ist im Montagezustand insbesondere entlang der Y-Richtung orientiert. Der Führungsschlitz ist hierbei vorzugsweise entlang der Schienenlängsrichtung, also der Montagerichtung beziehungsweise im Wesentlichen entlang der Z-Richtung, orientiert. Der Führungsschlitz wirkt somit insbesondere als eine Positionierungs- oder Montagehilfe beim Fügen der Türstruktur und der Trägerplatte. Des Weiteren wird durch den Führungsschlitz ein Formschluss des vertikalen T-Schenkels, und somit des Seilumlenkbereichs, entlang der X-Richtung realisiert.

Der horizontale T-Schenkel, welcher im Montagezustand insbesondere entlang der X-Richtung orientiert ist, hintergreift zumindest abschnittsweise die Aufnahmekontur, so dass der Formschluss zwischen dem Seilumlenkbereich und der Türstruktur entlang der Y-Richtung realisiert ist. Dies bedeutet, dass der horizontale T-Schenkel im Wesentlichen an einer dem Seilumlenkbereich abgewandten Oberfläche der Türstruktur beziehungsweise der Aufnahmekontur angeordnet ist.

In einer erfindungsgemäßen Ausgestaltung weist die Fügekontur zwei einander zugewandte Anlageflächen für die Türstruktur auf. Die Anlageflächen sind hierbei zweckmäßigerweise parallel und entlang der Y-Richtung beabstandet zueinander ausgeführt. Zwischen den Anlageflächen ist somit eine lichte Weite oder Abstand als Aufnahme ausgebildet. Die Aufnahmekontur weist hierbei eine Abstimmfläche auf, welche formschlüssig, insbesondere form- und kraftschlüssig, zwischen den Anlageflächen eingefasst ist. Durch die Fügekontur ist somit eine besonders einfache und aufwandreduzierte Montage ermöglicht. Im Montagezustand ist der Seilumlenkbereich somit besonders zuverlässig und stabil entlang der Y-Richtung fixiert. Dadurch werden Geräuschentwicklungen aufgrund von Relativbewegungen zwischen den Bauteilen vorteilhaft und wirkungsvoll vermieden oder zumindest reduziert.

Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (dies bedeutet diejenige Kraft, welche die Teile gegeneinander drückt, beispielsweise eine Schraubenkraft oder die Gewichtskraft selbst), kann die kraftschlüssige Verbindung nicht aufrecht erhalten und somit gelöst werden.

Diese Ausgestaltung der Fügekontur und Aufnahmekontur ermöglicht eine besonders einfache Werkzeugabstimmung zur Fügung oder Montage der Türstruktur mit dem Seilumlenkbereich der Trägerplatte. Dadurch wird die Montage vereinfacht und die Montage- oder Herstellungskosten vorteilhaft reduziert.

Die Anlageflächen sind beispielsweise unsymmetrisch, also beispielsweise entlang der X- und/oder Z-Richtung versetzt zueinander, angeordnet.

Weiterhin ist es beispielsweise denkbar, dass die Fügekontur beziehungsweise die Anlageflächen mittels unterschiedlicher Bauteile gebildet sind. Mit anderen Worten ist es beispielsweise möglich, dass eine (erste) Anlagefläche der Fügekontur an den Seilumlenkbereich angeformt ist, und dass die zweite Anlagefläche als ein separates Bauteil ausgeführt ist, welches zur Bildung der Fügekontur an den Seilumlenkbereich montiert oder gefügt wird. Beispielsweise ist es hierbei möglich, dass die Fügekontur oder die Anlageflächen der Türstruktur selbst durch zum Beispiel zwei unterschiedliche Bauteile gebildet werden, beispielsweise mittels eines Rahmenteils und eines Crashrohrs.

In einer geeigneten Weiterbildung weist die Abstimmfläche eine Stufenkontur, also einen Flächenversatz, insbesondere entlang der Y-Richtung, auf, welche von den Anlageflächen übergriffen ist. Die Stufenkontur wirkt somit bei der Montage als ein Toleranzausgleich entlang der Y-Richtung. Dadurch ist eine besonders stabile Halterung des Seilumlenkbereichs an der Aufnahmekontur realisiert.

In einer zweckmäßigen Ausführung ist zumindest eine der Anlageflächen freiendseitig mit einer Einschnäbelung, also mit einer fasenartigen Führungskontur, versehen. Dadurch ist ein besonders einfaches Einführen der Abstimmfläche zwischen die Anlageflächen ermöglicht, wodurch die Montage vereinfacht wird.

In einer vorteilhaften Ausbildung ist die Fügekontur zumindest teilweise federelastisch oder flexibel ausgeführt. Dies bedeutet, dass beispielsweise mindestens eine der Anlageflächen federelastisch ausgebildet ist. Vorzugsweise ist somit mittels den Anlageflächen der Fügekontur eine Hinterhakung mit einer gewissen mechanischen Vorspannung realisiert, so dass die Abstimmfläche im Montage- oder Fügezustand kraftschlüssig zwischen den Anlageflächen geklemmt gehalten ist. Dadurch ist eine besonders stabile Befestigung realisiert.

In einer besonders geräuschreduzierten und klapperfreien Ausführung ist die Fügekontur mit einem Dämpfungselement versehen. Das Dämpfungselement ist hierbei zwischen zumindest einer Anlagefläche und der Abstimmfläche angeordnet. Das Dämpfungselement ist beispielsweise als ein auf die Fügekontur beziehungsweise Anlageflächen aufgesetzter oder aufgesteckter Dämpfer, insbesondere ein Dämpfer aus einem Ethylen-Propylen-Dien-Kautschuk (kurz: EPDM, Ethylen-Propylen-Dien; M-Gruppe), oder als eine angespritzte Weichkomponente, beispielsweise ein Zwei-Komponenten-Dichtschaum (2K-Dichtschaum), ausgeführt.

In einer besonders stabilen Ausbildung ist die Fügekontur mit einer Verstärkungsrippe versehen. Dies bedeutet, dass die Fügekontur mittels der mechanisch verstärkt oder stabilisiert ist. Dadurch ist eine besonders stabile Fügekontur realisiert, welche sich in der Folge auf einen besonders stabilen und betriebssicheren Formschluss zwischen dem Seilumlenkbereich und der Türstruktur überträgt.

In einer bevorzugten Anwendung ist das Türmodul ein Teil einer Fahrzeugtür, insbesondere einer Seitentür eines Kraftfahrzeugs. Dadurch ist eine besonders geeignete und kostengünstige Fahrzeugtür realisiert.

Nachfolgend sind Ausführungsbeispiele der Erfindung anhand einer Zeichnung näher erläutert. Darin zeigen:
- Fig. 1: in schematischer Darstellung ein Seil-Fensterheber einer Fahrzeugtür,
- Fig. 2: in Perspektive ausschnittsweise einen Seilumlenkbereich des Seil-Fensterhebers,
- Fig. 3: in Frontansicht ein Türmodul einer Fahrzeugtür, mit einer Trägerplatte und mit einer Türstruktur,
- Fig. 4: in Draufsicht eine Aufnahmekontur der Türstruktur in einer nicht erfindungsgemäßen Ausführungsform,
- Fig. 5: in Perspektive eine Fügekontur des Seilumlenkbereichs in einer nicht erfindungsgemäßen Ausführungsform,
- Fig. 6: in Draufsicht die Fügekontur in der nicht erfindungsgemäßen Ausführungsform,
- Fig. 7: in Perspektive die nicht erfindungsgemäße Fügekontur und die Aufnahmekontur bei einem Fügevorgang,
- Fig. 8: in Perspektive mit Blick auf eine Außenseite die Fügeverbindung zwischen der nicht erfindungsgemäßen Fügekontur und der Aufnahmekontur,
- Fig. 9: in Perspektive mit Blick auf eine Innenseite die Fügeverbindung zwischen der nicht erfindungsgemäßen Fügekontur und der Aufnahmekontur,
- Fig. 10: in Perspektive eine Fügekontur des Seilumlenkbereichs in einer erfindungsgemäßen Ausführungsform,
- Fig. 11: in Perspektive eine Aufnahmekontur der Türstruktur in einer erfindungsgemäßen Ausführungsform,
- Fig. 12: in Perspektive die Fügeverbindung zwischen der Fügekontur und der Aufnahmekontur gemäß der erfindungsgemäßen Ausführungsform,
- Fig. 13: in Perspektive die Fügekontur in einer zweiten erfindungsgemäßen Ausführungsform,
- Fig. 14: in Perspektive die Fügekontur in der zweiten erfindungsgemäßen Ausführungsform,
- Fig. 15: in Perspektive die Aufnahmekontur in einer zweiten erfindungsgemäßen Ausführungsform, und
- Fig. 16: in Perspektive die Aufnahmekontur in der zweiten erfindungsgemäßen Ausführungsform.

Einander entsprechende Teile und Größen sind in allen Figuren stets mit den gleichen Bezugszeichen versehen.

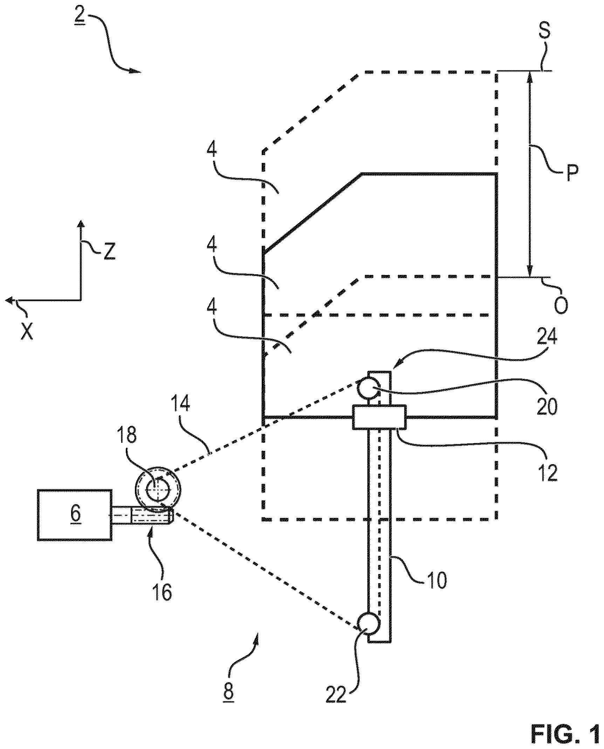

In der Fig. 1 ist in vereinfachter und schematischer Darstellung ein elektrischer Fensterheber 2 als Stellvorrichtung für eine (Fahrzeug-)Fensterscheibe 4 eines Kraftfahrzeugs gezeigt.

Der Fensterheber 2 weist einen Stellmotor 6 auf, welcher mittels einer Stellmechanik 8 auf die Fensterscheibe 4 wirkt. Die Stellmechanik 8 weist eine Führungsschiene 10 und einen mit der Fensterscheibe 4 gekoppelten Mitnehmer oder Schienengleiter 12 auf.

In dem gezeigten Ausführungsbeispiel ist der Fensterheber 2 als ein einfach geführter Seil-Fensterheber ausgeführt. Die Stellmechanik 8 weist hierbei zusätzlich zu der Führungsschiene 10 einen Seilzug 14 auf.

Der Stellmotor 6 des Fensterhebers 2 treibt über ein Schnecken- oder Stirnradgetriebe 16 eine Seiltrommel 18 der Stellmechanik 8 an. Ein Zugseil des Seilzugs 14 ist derart an der Seiltrommel 18 angeordnet, dass bei durch das Getriebe 16 bewirkten Drehungen der Seiltrommel 18 ein Auf- und Abwickeln des Zugseils erfolgt.

An der Führungsschiene 10 sind eine obere Seilumlenkrolle 20 und eine untere Seilumlenkrolle 22 befestigt, welche an den gegenüberliegenden (Schienen-)Stirnseiten angeordnet sind. Das Zugseil des Seilzugs 14 ist um die Seilumlenkrollen 20, 22 herum geführt.

Bei einer Betätigung des Stellmotors 6 wird die Fensterscheibe 4 in ihrer (Scheiben-) Position P verfahren. Die Fensterscheibe 4 ist hierbei reversibel zwischen einer Schließstellung S, welche die höchstmögliche Position P darstellt, und einer Öffnungsstellung O, welche die tiefst mögliche Position P darstellt, verfahrbar. In diesen Stellungen S und O ist die Fensterscheibe 4 in der Fig. 1 jeweils gestrichelt angedeutet. Mit durchgezogenen Linien ist die Fensterscheibe 4 dagegen in einer halbgeöffneten Zwischenstellung dargestellt.

Nachfolgend sind Angaben hinsichtlich der Raumrichtungen auch in einem Koordinatensystem des Kraftfahrzeugs (Fahrzeugkoordinatensystem) bezüglich der beispielhaften Einbausituation in einer Seitentür des Kraftfahrzeugs angegeben. Die Abszissenachse (X-Achse) ist hierbei entlang der Fahrzeuglängsrichtung und die Ordinatenachse (Y-Achse) entlang der Fahrzeugquerrichtung sowie die Applikatenachse (Z-Achse) entlang der Fahrzeughöhenrichtung orientiert.

Die Längsrichtung der Führungsschiene 12 (Schienenlängsrichtung) ist hierbei etwa parallel zur Applikatenachse (Z) orientiert, wobei die Querrichtung der Führungsschiene 10 (Schienenquerrichtung) im Wesentlichen parallel zur Abszissenachse (X) ausgerichtet ist. Die Höhenrichtung der Führungsschiene 10 (Schienenhöhenrichtung) ist senkrecht zu der Schienenquerrichtung und der Schienenlängsrichtung orientiert, und verläuft somit etwa parallel zu der Ordinatenachse (Y).

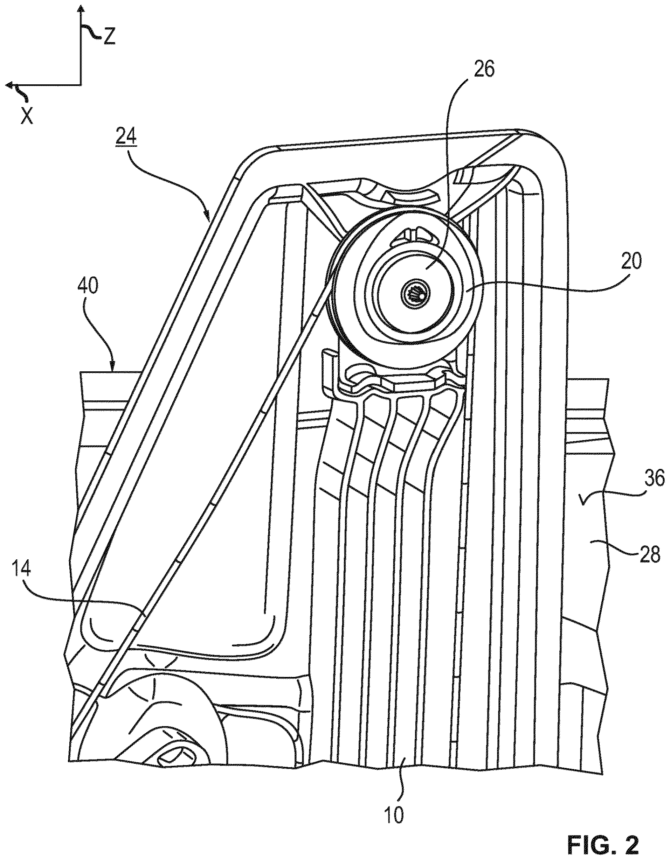

In der Fig. 2 ist ausschnittsweise ein Seilumlenkbereich 24 des Fensterhebers 2 beziehungsweise der Führungsschiene 10, also der stirnseitige Schienenendbereich, an welchem die Seilumlenkrolle 20 angeordnet ist, näher gezeigt.

Der in Fig. 2 gezeigte Seilumlenkbereich 24 weist einen einstückig, also einteilig oder monolithisch, angeformte, etwa zylinderförmige Lagerstelle 26 auf, auf welche die Seilumlenkrolle 20 rotierbar oder drehbar gelagert aufgesetzt ist. Die Lagerstelle 26 beziehungsweise der Seilumlenkbereich 24 sind hierbei schrauben- oder bolzenlos ausgeführt, dies bedeutet, dass keine zusätzlichen Befestigungselemente in der Lagerstelle 26 angeordnet sind.

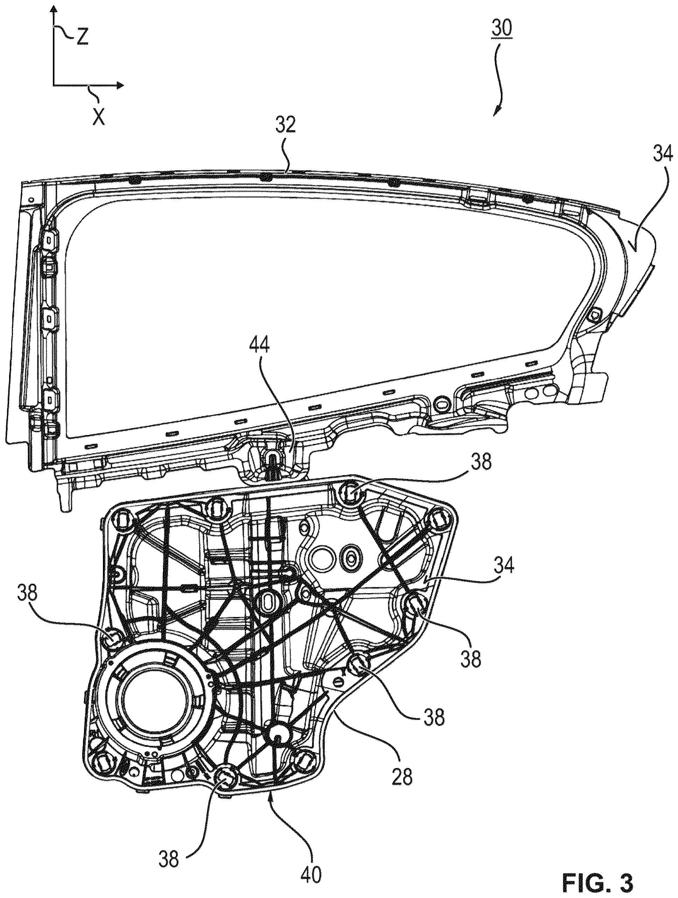

Im Montagezustand ist der Fensterheber 2 an einer Trägerplatte 28 eines in Fig. 3 gezeigten Türmoduls 30 vormontiert. Die Trägerplatte 28 ist dazu ausgebildet und vorgesehen an einer Türstruktur 32 festgelegt zu werden. Die Trägerplatte 28 ist hierbei als ein (Tür-)Modulträger oder Aggregatträger ausgebildet, an welchem zusätzlich zu dem Fensterheber 2 weitere Funktionskomponenten einer nicht näher gezeigten Fahrzeugtür montierbar sind. Die Türstruktur 32 ist in dem in den Figuren gezeigten Ausführungsbeispiel als eine Fensterrahmenstruktur ausgebildet, und kann hierbei auch als Teil eines Türinnenblechs ausgeführt sein.

Bei einem bestimmungsgemäßen Einbau des Türmoduls 30 in eine Seitentür eines Kraftfahrzeugs weist dieses - sowie auch die Trägerplatte 28 und die Türstruktur 32 - eine Innenseite 34 und eine Außenseite 36 auf. Die Innenseite 34 ist hierbei im Einbau- oder Montagezustand einem Innenraum (Fahrgastzelle) des Kraftfahrzeugs zugewandt, und die Außenseite 36 einem Bereich außerhalb des Kraftfahrzeugs. Die Fig. 3 zeigt ein Blick auf die Innenseite 34 des Türmoduls 30.

An der Innenseite 34 des Türmoduls 30 beziehungsweise der Trägerplatte 28 sind mehrere Schnittstellen zur Verbindung mit einem nicht näher gezeigten Türkasten der Türstruktur 32 beziehungsweise des Türinneblechs in Form von Befestigungsöffnungen 38 ersichtlich. Die Befestigungsöffnungen 38 sind hierbei an einem Rand 40 der Trägerplatte 28 angeordnet. Die Befestigungsöffnungen 38 sind in den Figuren lediglich beispielhaft mit Bezugszeichen versehen.

Wie beispielsweise in der Fig. 2 ersichtlich ist, erstreckt sich die Führungsschiene 10 mit dem Seilumlenkbereich 24 über den äußeren Rand 40 der Trägerplatte 28 hinaus. Insbesondere steht der Seilumlenkbereich 24 hierbei der oberen Kante der Trägerplatte 28 etwa senkrecht empor.

Der Seilumlenkbereich 24 ist hierbei als eine (Füge-)Schnittstelle der Trägerplatte 28 mit der Türstruktur beziehungsweise der Fensterrahmenstruktur 32 des Türinnenblechs ausgebildet.

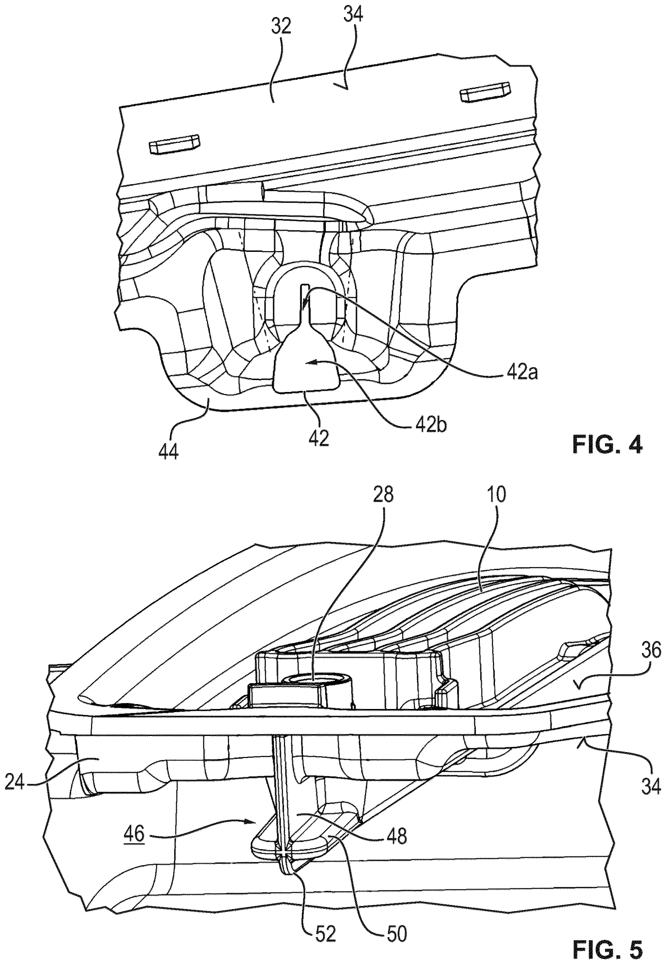

Wie beispielsweise in der Fig. 4 gezeigt ist, weist die Türstruktur 32 eine Aufnahmekontur 42 in Form einer die Türstruktur 32 durchsetzenden Durchführöffnung auf. Die Aufnahmekontur 42 ist in einen Auslegebereich 44 der Türstruktur 32 eingebracht, welcher an einer unteren, der Trägerplatte 28 zugewandten Kante der Türstruktur 32 angeformt ist. Die Aufnahmekontur 42 weist hierbei einen vergleichsweise schmalen Schlitzbereich oder Führungsschlitz 42a und einen darin einmündenden, vergleichsweise breiten Einführbereich 42b auf.

Die Fig. 5 zeigt den Seilumlenkbereich 24 in einer perspektivischen Draufsicht. Wie in der Fig. 5 vergleichsweise deutlich ersichtlich ist, ist der Seilumlenkbereich 24 mit einer emporstehenden Fügekontur 46 versehen, welche in dem in Fig. 3 gezeigten Füge- oder Montagezustand formschlüssig in der Aufnahmekontur 42 der Türstruktur 32 einsitzt.

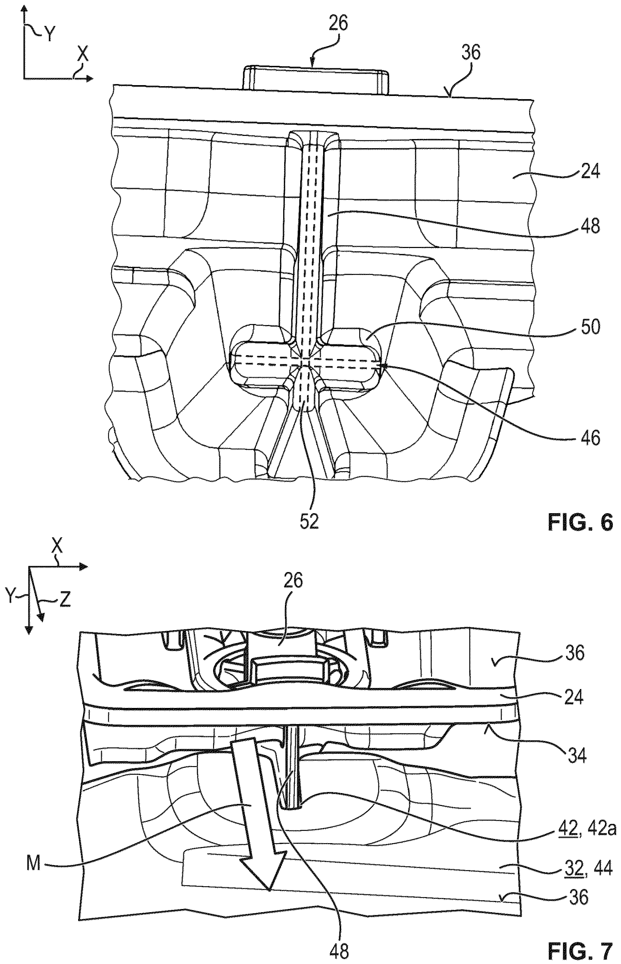

Nachfolgend ist die nicht erfindungsgemäße Fügekontur 46 und deren Funktion anhand der Figuren 6 bis 9 näher erläutert.

Die Führungsschiene 10 beziehungsweise zumindest der Seilumlenkbereich 24 ist als ein Spritzgussteil hergestellt, bei welchem die Fügekontur 46 einstückig, also einteilig oder monolithisch, angeformt ist. Die Fügekontur 46 ist hierbei an einer der Lagerstelle 26 gegenüberliegenden Seite des Seilumlenkbereichs 24 angeordnet. In dem gezeigten Ausführungsbeispiel ist die Fügekontur 46 an der Innenseite 34 des Seilumlenkbereichs 24 angeordnet.

Wie insbesondere in der Fig. 6 ersichtlich ist, weist die Fügekontur 46 hierbei in der XY-Ebene im Wesentlichen eine T-förmige Querschnittsform mit einem vertikalen, etwa entlang der Y-Achse orientierten, T-Schenkel 48 und mit einem horizontalen, etwa entlang der X-Richtung orientierten, T-Schenkel 50 auf. Die T-Form ist in der Fig. 6 strichliniert gezeigt. An dem T-Schenkel 50 ist als Verlängerung des T-Schenkels 48 eine Verstärkungsrippe 52 angeformt. Die Fügekontur 46 und die Verstärkungsrippe 52 erstrecken sich hierbei entlang der Z-Achse.

Aufgrund der T-förmigen Geometrie kann die Fügekontur 46 im Zuge des Spritzgussprozesses des Seilumlenkbereichs 24 ohne einen Schieber hergestellt werden.

Die Fügekontur 46 ist derart ausgelegt und ausgestaltet, dass wenn die Fügekontur in der Aufnahmekontur 42 einsitzt, die Fügekontur 46 die Aufnahmekontur 42 zumindest teilweise formschlüssig hintergreift, so dass der Seilumlenkbereich 24 entlang der Y-Achse stabilisierend gehalten ist. Dies bedeutet, dass durch die Fügeverbindung zwischen dem Seilumlenkbereich 24 und der Türstruktur 32 auftretende Lasten, Spannungen und Kräfte, welche auf den Seilumlenkbereich 24 beziehungsweise die Lagerstelle 26 einwirken, zumindest teilweise auf die Türstruktur 32 übertragen werden.

Wie in der Fig. 7 dargestellt ist, wird die Fügekontur 46 entlang einer Montagerichtung M, welche im Wesentlichen entlang der Schienenlängsrichtung beziehungsweise Z-Richtung orientiert ist, in die Aufnahmekontur 42 eingesteckt. Hierbei wird die Fügekontur 46 in dem Einführbereich 42b und den Führungsschlitz 42a geführt.

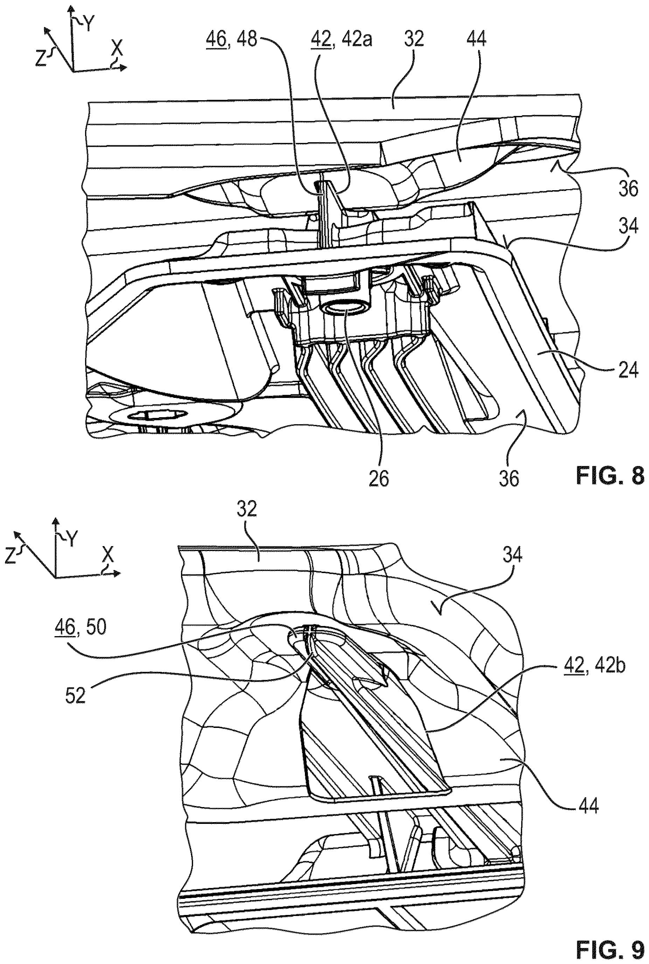

Wie in den Figuren 8 und 9 vergleichsweise deutlich ersichtlich ist, greift der vertikale T-Schenkel 48 der Fügekontur 46 im eingesteckten Zustand oder Fügezustand (Montagezustand) in den Führungsschlitz 42a der Aufnahmekontur 42 formschlüssig ein. Der Führungsschlitz 42a ist zumindest teilweise entlang der Z-Achse orientiert. Der Führungsschlitz 42a wirkt somit insbesondere als eine Positionierungs- oder Montagehilfe beziehungsweise Einsteckhilfe beim Fügen der Türstruktur 32 und der Trägerplatte 28. Des Weiteren wird durch den Führungsschlitz 42a ein Formschluss des vertikalen T-Schenkels 48, und somit des Seilumlenkbereichs 24, entlang der X-Achse realisiert.

Wie in den Figuren 8 und 9 vergleichsweise deutlich ersichtlich ist, ist der T-Schenkel 48 der Fügekontur 46 im Wesentlichen zwischen der Innenseite 34 des Seilumlenkbereichs 24 und der Außenseite 36 des Auslegebereichs 44 angeordnet. Der T-Schenkel 50 ist auf der Innenseite 34 des Auslegebereichs 44 beziehungsweise der Türstruktur 32 angeordnet, so dass der horizontale T-Schenkel 50 zumindest abschnittsweise den Führungsschlitz 42a der Aufnahmekontur 42 hintergreift. Dadurch ist ein zuverlässiger und betriebssicherer Formschluss zwischen dem Seilumlenkbereich 24 und der Türstruktur 32 entlang der Y-Achse realisiert.

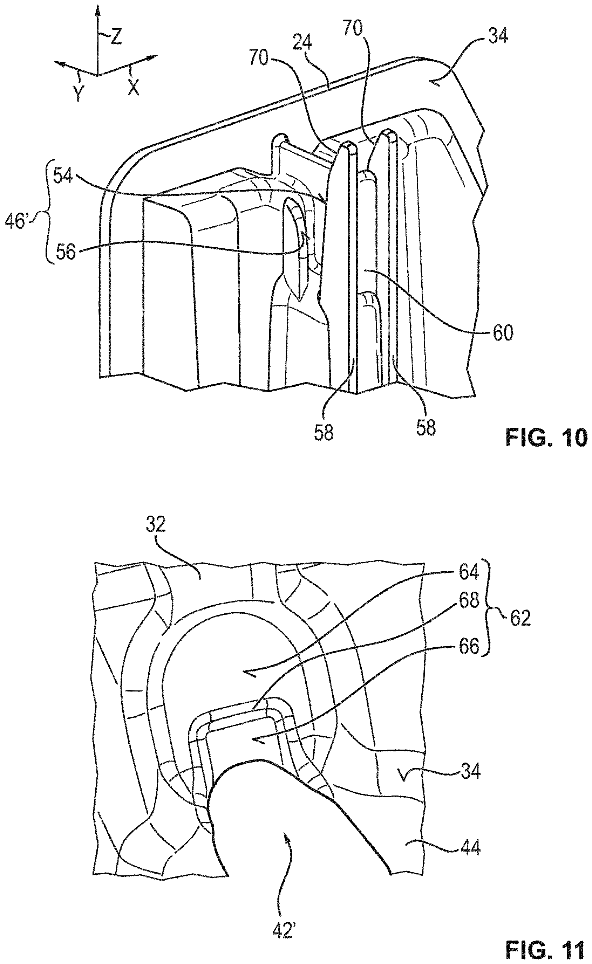

Nachfolgend ist ein erfindungsgemäßes Ausführungsbeispiel der Aufnahmekontur 42' und der Fügekontur 46' anhand der Figuren 10 bis 12 näher erläutert.

Die in Fig. 10 gezeigte Fügekontur 46' weist in dieser Ausführungsform zwei einander zugewandte Anlageflächen 54 und 56 auf, welche einstückig, also einteilig oder monolithisch an die Innenseite 34 des Seilumlenkbereichs 24 angeformt sind. Die Anlageflächen 54 und 56 sind in der XZ-Ebene im Wesentlichen parallel, und entlang der Y-Richtung beabstandet zueinander angeordnet.

Die Anlagefläche 54 weist zwei seitliche Verstärkungs- oder Halterippen 58 auf, welche entlang der X-Richtung voneinander beabstandet sind, und zwischen welchen eine Querfläche 60 vorgesehen ist. Die Anlagefläche 56 ist als eine Gegenrippe ausgebildet, welche gegenüberliegend zu einer der Halterippen 58 angeordnet ist. Beispielsweise ist hierbei eine zweite Gegenrippe der Anlagefläche 56 vorgesehen, welche gegenüberliegend zu der anderen Halterippe 58 angeordnet ist.

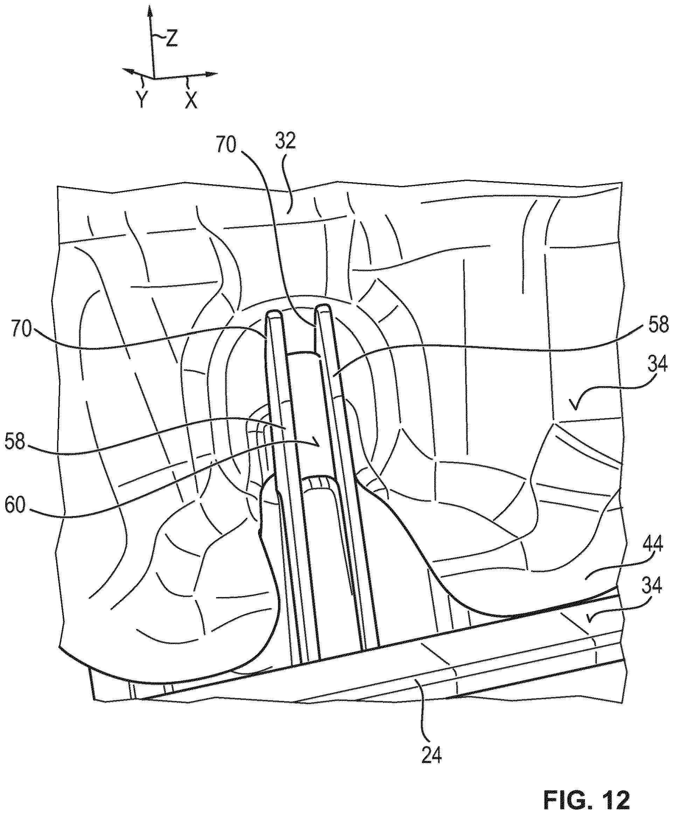

In der Fig. 11 ist die Aufnahmekontur 42' gezeigt. Die Aufnahmekontur 42' ist im Gegensatz zur Aufnahmekontur 42 nicht umfangsseitig geschlossen, sondern ist in Richtung der Fügekontur 46' beziehungsweide in Richtung der Trägerplatte 28 geöffnet ausgebildet. Die Aufnahmekontur 42' weist hierbei eine Abstimmfläche 62 auf, welche - wie in der Fig. 12 ersichtlich - formschlüssig zwischen den Anlageflächen 54 und 56 der Fügekontur 46' eingefasst oder einfassbar ist.

Die Abstimmfläche 62 weist zwei Flächen 64, 66 auf, welche über eine Stufenkontur 68 in einander übergehen. Die Flächen 64 und 66 sind im Wesentlichen in der XZ-Ebene, und somit parallel zu den Anlageflächen 54, 56 orientiert, wobei durch die Stufenkontur 68 ein stufenförmiger oder absatzförmiger Flächenversatz entlang der Y-Richtung realisiert ist. Die Stufenkontur 68 bewirkt somit bei der Montage einen Toleranzausgleich entlang der Y-Richtung.

Zur Montage oder zum Fügen der Türstruktur 32 mit dem Seilumlenkbereich 24 wird die Aufnahmekontur 42' entlang der Z-Richtung in die zwischen den Anlageflächen 54, 56 gebildete Aufnahme eingeschoben, so dass die Flächen 64, 66 der Abstimmfläche 62 von den Anlageflächen 54, 56 zumindest abschnittsweise übergriffen sind.

Für ein vereinfachtes Einführen der Abstimmfläche 62 zwischen die Anlageflächen 54, 56 sind die Freienden der Halterippen 58, also die der Querfläche 60 entlang der Z-Richtung überstehenden Bereiche der Halterippen 58, mit einer Einschnäbelung oder Fase 70 als Führungskontur versehen. Die Einschnäbelung 70 weist hierbei einen zur Spitze hin verjüngten Verlauf auf. Mit anderen Worten ist entlang der Z-Richtung eine geneigte Schräge gebildet, welche als Einführ- oder Positionierungshilfe beim Fügen der Türstruktur 32 mit dem Seilumlenkbereich 24 wirkt.

Vorzugsweise sind die Halterippen 58 der Fügekontur 46' biege- oder federelastisch ausgebildet, wobei im Montage- oder Fügezustand eine entlang der Y-Richtung orientierte Feder- oder Rückstellkraft realisiert wird, welche als mechanische Vorspannung einen klemmenden Kraftschluss der Abstimmfläche 62 zwischen den Anlageflächen 54, 56 realisiert.

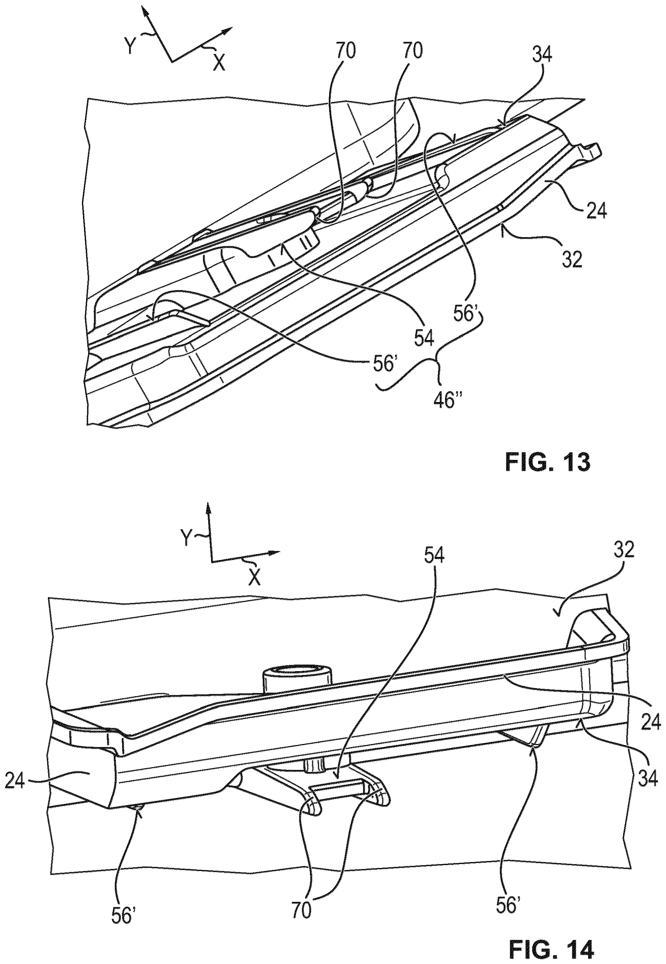

Nachfolgend ist ein zweites erfindungsgemäßes Ausführungsbeispiel der Aufnahmekontur 42" und der Fügekontur 46" anhand der Figuren 13 bis 16 näher erläutert.

Die in Fig. 13 und in Fig. 14 gezeigte Fügekontur 46" weist in dieser Ausführungsform zwei einander zugewandte Anlageflächen 54 und 56' auf, welche einstückig, also einteilig oder monolithisch an die Innenseite 34 des Seilumlenkbereichs 24 angeformt sind. Die Anlagefläche 56' ist in diesem Ausführungsbeispiel als zwei entlang der X-Richtung beidseitig versetzt zur Anlagefläche 54 angeordnete Halterippen ausgebildet.

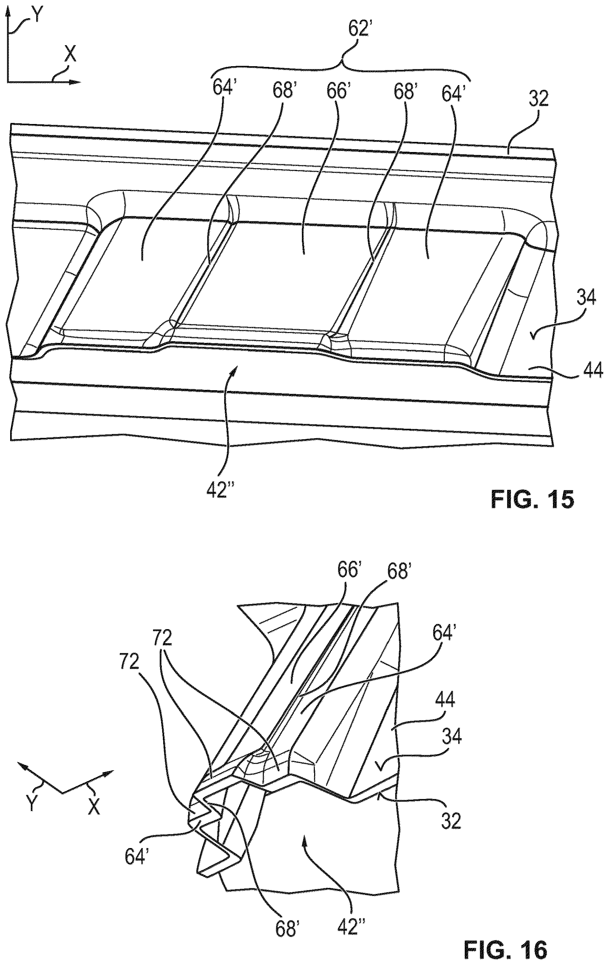

Die Figuren 15 und 16 zeigen die Aufnahmekontur 42". Die Aufnahmekontur 42" weist hierbei eine Abstimmfläche 62' auf. Die Abstimmfläche 62' weist in dieser Ausführungsform zwei Flächen 64' und eine Fläche 66' auf, welche entlang der X-Richtung abwechselnd oder alternierend angeordnet sind. Die mittig angeordnete Fläche 66' ist hierbei über jeweils eine Stufenkontur 68' gegenüber den Flächen 64` versetzt angeordnet. Die Fläche 66' steht den Flächen 64' somit zumindest abschnittsweise entlang der Y-Richtung über oder empor.

Wie insbesondere in der Fig. 16 ersichtlich ist, ist die Abstimmfläche 62' beziehungsweise die Flächen 64',66' mit einer freiendseitigen Einschnäbelung oder Fase 72 versehen.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

Insbesondere sind auch andere Querschnittsformen der Fügekontur 46, 46', 46" und/oder der Aufnahmekontur 42, 42', 42" denkbar. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Weiterhin ist es beispielsweise denkbar, dass die Anlageflächen 54, 54', 56, 56' mittels unterschiedlicher Bauteile gebildet sind. Ebenso denkbar ist, dass die Abstimmfläche 62, 62' mehrteilig ausgebildet ist, insbesondere ist es möglich, dass die Flächen 64, 64', 66, 66' von zwei unterschiedlichen Bauteilen gebildet sind.

Ebenso denkbar ist beispielsweise, dass die Fügekontur 46', 46' mit einem Dämpfungselement versehen ist.

### Bezugszeichenliste

- 2: Fensterheber
- 4: Fensterscheibe
- 6: Stellmotor
- 8: Stellmechanik
- 10: Führungsschiene
- 12: Schienengleiter/Mitnehmer
- 14: Seilzug
- 16: Schnecken-/Stirnradgetriebe
- 18: Seiltrommel
- 20: Seilumlenkrolle
- 22: Seilumlenkrolle
- 24: Seilumlenkbereich
- 26: Lagerstelle
- 28: Trägerplatte
- 30: Türmodul
- 32: Türstruktur
- 34: Innenseite
- 36: Außenseite
- 38: Befestigungsöffnung
- 40: Rand
- 42, 42', 42": Aufnahmekontur
- 42a: Führungsschlitz
- 42b: Einführbereich
- 44: Auslegebereich
- 46, 46', 46": Fügekontur
- 48: T-Schenkel
- 50: T-Schenkel
- 52: Verstärkungsrippe
- 54, 54', 56, 56': Anlagefläche
- 58: Verstärkungsrippe/Halterippe
- 60: Querfläche
- 62, 62': Abstimmfläche
- 64, 64', 66, 66': Fläche
- 68, 68': Stufenkontur
- 70, 72: Einschnäbelung

- S: Schließposition
- O: Offenposition
- P: Scheibenposition
- X: Fahrzeuglängsrichtung
- Y: Fahrzeugquerrichtung
- Z: Fahrzeughöhenrichtung
- M: Montagerichtung

## Patentansprüche

1. Türmodul (30) einer Fahrzeugtür, aufweisend eine Trägerplatte (28) mit einem Seil-Fensterheber (2) mit mindestens einer Führungsschiene (10), und eine damit gefügte oder fügbare Türstruktur (32),
- wobei sich die Führungsschiene (10) mit einem Seilumlenkbereich (24) über einen äußeren Rand (40) der Trägerplatte (28) hinaus erstreckt,
- wobei der Seilumlenkbereich (28) mit einer Fügekontur (46', 46") versehen ist, welche im Fügezustand formschlüssig in einer Aufnahmekontur (42', 42") der Türstruktur (32) einsitzt,
- wobei die Fügekontur (46', 46") einteilig an den Seilumlenkbereich (24) angeformt ist,
- wobei die Fügekontur (46', 46") die Aufnahmekontur (42', 42") derart hintergreift, dass der Seilumlenkbereich (24) entlang einer Richtung (Y) senkrecht zum Seilumlenkbereich (24) stabilisierend gehalten ist, und
- wobei die Fügekontur (46', 46") zwei einander zugewandte Anlageflächen (54, 54', 56, 56') für die Türstruktur (32) aufweist, wobei eine Abstimmfläche (62, 62') der Aufnahmekontur (42',42") formschlüssig zwischen den Anlageflächen (54, 54', 56, 56') eingefasst ist.

2. Türmodul (30) nach Anspruch 1,
**dadurch gekennzeichnet,**
**dass** die Aufnahmekontur (42', 42") einteilig oder mehrteilig ausgeführt ist.

3. Türmodul (30) nach Anspruch 1 oder 2,
**dadurch gekennzeichnet,**
**dass** der Seilumlenkbereich (24) eine schrauben- oder bolzenlose Lagerstelle (26) aufweist, an welcher eine Seilumlenkrolle (20) drehbar gelagert ist.

4. Türmodul (30) nach einem der Ansprüche 1 bis 3,
**dadurch gekennzeichnet,**
**dass** die Fügekontur (46') an einer der Lagerstelle (26) gegenüberliegenden Seite (34) des Seilumlenkbereichs (24) angeordnet ist.

5. Türmodul (30) nach einem der Ansprüche 1 bis 4,
**dadurch gekennzeichnet,**
**dass** die Fügekontur (46', 46") in die Aufnahmekontur (42', 42") entlang einer Schienenlängsrichtung (M, Z) der Führungsschiene (10) einsteckbar oder eingesteckt ist.

6. Türmodul (30) nach einem der Ansprüche 1 bis 5,
**dadurch gekennzeichnet,**
**dass** zumindest der Seilumlenkbereich (24) als ein Spritzgussteil ausgeführt ist.

7. Türmodul (30) nach Anspruch 6,
**dadurch gekennzeichnet,**
**dass** die Fügekontur im Zuge des Spritzgussprozesses ohne einen Schieber hergestellt ist.

8. Türmodul (30) nach einem der Ansprüche 1 bis 7,
**dadurch gekennzeichnet,**
**dass** die Abstimmfläche (62, 62') eine Stufenkontur (68, 68') aufweist, welche von den Anlageflächen (54, 54', 56, 56') übergriffen ist.

9. Türmodul (30) nach einem der Ansprüche 1 bis 8,
**dadurch gekennzeichnet,**
**dass** die mindestens eine Anlagefläche (56, 56') freiendseitig mit einer Einschnäbelung (70) versehen ist.

10. Türmodul (30) nach einem der Ansprüche 1 bis 9,
**dadurch gekennzeichnet,**
**dass** die Fügekontur (46', 46") zumindest teilweise federelastisch ausgeführt ist.

11. Türmodul (30) nach einem der Ansprüche 1 bis 10,
**dadurch gekennzeichnet,**
**dass** die Fügekontur (46', 46") mit einem Dämpfungselement versehen ist.

12. Türmodul (30) nach einem der Ansprüche 1 bis 11,
**dadurch gekennzeichnet,**
**dass** die Fügekontur (46', 46") mit einer Verstärkungsrippe (52, 58) versehen ist

13. Fahrzeugtür mit einem Türmodul (30) nach einem der Ansprüche 1 bis 12.

## Claims

1. Door module (30) of a vehicle door, comprising a carrier plate (28) having a cable window lift (2) having at least one guide rail (10), and comprising a door structure (32) which is or can be joined to the carrier plate,
- wherein the guide rail (10) extends with a cable deflection region (24) beyond an outer edge (40) of the carrier plate (28),
- wherein the cable deflection region (28) is provided with a joining contour (46', 46") which, in the joined state, is positively inserted in a receiving contour (42', 42") of the door structure (32),
- wherein the joining contour (46', 46") is formed in one piece on the cable deflection region (24),
- wherein the joining contour (46', 46") engages behind the receiving contour (42', 42") in such a way that the cable deflection region (24) is stabilizingly held in a direction (Y) perpendicular to the cable deflection region (24), and
- wherein the joining contour (46', 46") has two bearing surfaces (54, 54', 56, 56') which face one another for the door structure (32), wherein a mating surface (62, 62') of the receiving contour (42', 42") is positively gripped between the bearing surfaces (54, 54', 56, 56').

2. Door module (30) according to Claim 1,
**characterized**
**in that** the receiving contour (42', 42") is configured in one piece or in multiple pieces.

3. Door module (30) according to Claim 1 or 2,
**characterized**
**in that** the cable deflection region (24) has a bearing point (26) without screws or bolts, a cable deflection roller (20) being mounted thereon so as to be able to rotate.

4. Door module (30) according to one of Claims 1 to 3, **characterized**
**in that** the joining contour (46') is arranged on a side (34) of the cable deflection region (24) opposing the bearing point (26).

5. Door module (30) according to one of Claims 1 to 4, **characterized**
**in that** the joining contour (46', 46") is insertable or is inserted in the receiving contour (42', 42") in a rail longitudinal direction (M, Z) of the guide rail (10).

6. Door module (30) according to one of Claims 1 to 5, **characterized**
**in that** at least the cable deflection region (24) is designed as an injection-moulded part.

7. Door module (30) according to Claim 6,
**characterized**
**in that** the joining contour is produced without a slide during the injection-moulding process.

8. Door module (30) according to one of Claims 1 to 7, **characterized**
**in that** the mating surface (62, 62') has a stepped contour (68, 68') which is encompassed by the bearing surfaces (54, 54', 56, 56').

9. Door module (30) according to one of Claims 1 to 8, **characterized**
**in that** the at least one bearing surface (56, 56') is provided at the free end side with a lead-in portion (70).

10. Door module (30) according to one of Claims 1 to 9, **characterized**
**in that** the joining contour (46', 46") is designed to be at least partially resilient.

11. Door module (30) according to one of Claims 1 to 10, **characterized**
**in that** the joining contour (46', 46") is provided with a damping element.

12. Door module (30) according to one of Claims 1 to 11, **characterized**
**in that** the joining contour (46', 46") is provided with a reinforcing rib (52, 58).

13. Vehicle door with a door module (30) according to one of Claims 1 to 12.

## Revendications

1. Module de porte (30) d'une porte de véhicule, présentant une plaque de support (28) avec un lève-vitre à câble (2) avec au moins un rail de guidage (10), et une structure de porte (32) assemblée ou pouvant être assemblée avec celui-ci,
- le rail de guidage (10) s'étendant avec une zone de renvoi de câble (24) au-delà d'un bord extérieur (40) de la plaque de support (28),
- la zone de renvoi de câble (28) étant pourvue d'un contour d'assemblage (46', 46'') qui, à l'état assemblé, loge par complémentarité de forme dans un contour de réception (42', 42'') de la structure de porte (32),
- le contour d'assemblage (46', 46") étant formé d'une seule pièce sur la zone de renvoi de câble (24),
- le contour d'assemblage (46', 46") s'engageant par derrière dans le contour de réception (42', 42") de telle sorte que la zone de renvoi de câble (24) est maintenue de manière stabilisante le long d'une direction (Y) perpendiculaire à la zone de renvoi de câble (24), et
- le contour d'assemblage (46', 46") présentant deux surfaces d'appui (54, 54', 56, 56') tournées l'une vers l'autre pour la structure de porte (32), une surface d'accord (62, 62') du contour de réception (42', 42") étant enchâssée par complémentarité de forme entre les surfaces d'appui (54, 54', 56, 56').

2. Module de porte (30) selon la revendication 1, **caractérisé en ce que** le contour de réception (42', 42'') est réalisé en une pièce ou en plusieurs pièces.

3. Module de porte (30) selon la revendication 1 ou 2, **caractérisé en ce que** la zone de renvoi de câble (24) présente un point de palier (26) sans vis ou sans boulon, sur lequel une poulie de renvoi de câble (20) est montée de manière rotative.

4. Module de porte (30) selon l'une quelconque des revendications 1 à 3, **caractérisé en ce que** le contour d'assemblage (46') est agencé sur un côté (34) de la zone de renvoi de câble (24) opposé au point de palier (26).

5. Module de porte (30) selon l'une quelconque des revendications 1 à 4, **caractérisé en ce que** le contour d'assemblage (46', 46'') peut être inséré ou est inséré dans le contour de réception (42', 42'') le long d'une direction longitudinale de rail (M, Z) du rail de guidage (10) .

6. Module de porte (30) selon l'une quelconque des revendications 1 à 5, **caractérisé en ce qu'**au moins la zone de renvoi de câble (24) est réalisée sous la forme d'une pièce moulée par injection.

7. Module de porte (30) selon la revendication 6, **caractérisé en ce que** le contour d'assemblage est fabriqué sans coulisseau au cours du processus de moulage par injection.

8. Module de porte (30) selon l'une quelconque des revendications 1 à 7, **caractérisé en ce que** la surface d'accord (62, 62') présente un contour étagé (68, 68') qui est recouvert par les surfaces d'appui (54, 54', 56, 56').

9. Module de porte (30) selon l'une quelconque des revendications 1 à 8, **caractérisé en ce que** l'au moins une surface d'appui (56, 56') est pourvue d'un rétrécissement (70) du côté de l'extrémité libre.

10. Module de porte (30) selon l'une quelconque des revendications 1 à 9, **caractérisé en ce que** le contour d'assemblage (46', 46") est réalisé au moins partiellement sous forme élastique.

11. Module de porte (30) selon l'une quelconque des revendications 1 à 10, **caractérisé en ce que** le contour d'assemblage (46', 46'') est pourvu d'un élément d'amortissement.

12. Module de porte (30) selon l'une quelconque des revendications 1 à 11, **caractérisé en ce que** le contour d'assemblage (46', 46'') est pourvu d'une nervure de renforcement (52, 58).

13. Porte de véhicule avec un module de porte (30) selon l'une quelconque des revendications 1 à 12.
